# EUROPÄISCHE PATENTSCHRIFT

(11) **EP 2 266 004 B1**
(45) Veröffentlichungstag und Bekanntmachung des Hinweises auf die Patenterteilung: **30.01.2013**
(21) Anmeldenummer: 09727580.4
(22) Anmeldetag: 31.03.2009
(51) Int. Cl.: G05B 19/4093, G05B 19/4097

(54) **VERFAHREN UND NC-TEILEPROGRAMM ZUR STEUERUNG EINER LASERSCHNEIDANLAGE**
METHOD AND NC PART PROGRAM FOR CONTROLLING A LASER CUTTING SYSTEM
PROCÉDÉ ET PROGRAMME PIÈCE NC POUR LA COMMANDE D'UN DISPOSITIF DE COUPE LASER

(30) Priorität: 31.03.2008 DE 102008016733
(43) Veröffentlichungstag der Anmeldung: 29.12.2010
(73) Patentinhaber: TRUMPF Werkzeugmaschinen GmbH + Co. KG, 71254 Ditzingen (DE)
(72) Erfinder: REINWALD, Simon, 75365 Calw (DE); STÜCKEL, Markus, 71254 Ditzingen (DE)
(74) Vertreter: Kohler Schmid Möbus
(86) Internationale Anmeldenummer: PCT/DE2009/000411
(87) Internationale Veröffentlichungsnummer: WO 2009/121334

(56) Entgegenhaltungen:
- EP-A1- 0 754 992
- EP-A1- 1 277 537
- EP-A2- 0 871 100
- US-A1- 2002 072 824
- US-A1- 2003 023 341
- US-A1- 2008 016 696

## Beschreibung

Die vorliegende Erfindung betrifft ein Verfahren zur Steuerung einer Laserschneidanlage zum Schneiden von mehreren Rohrteilen aus einem Rohr mittels eines Laserstrahls, sowie ein entsprechendes Computerprogrammprodukt. Unter einem Rohr wird im Rahmen dieser Anmeldung ein länglicher Körper verstanden, dessen Länge in der Regel wesentlich größer als sein Querschnitt ist und der aus einem im Wesentlichen unflexiblen Material gefertigt ist. Rohre können eine beliebige offene oder geschlossene Querschnittsform aufweisen, wobei Rund- und Rechteckrohre die gebräuchlichsten Rohre darstellen. Rohrförmige Bauteile, die aus Rohren durch Laserschneiden hergestellt werden, werden im Rahmen dieser Anmeldung als Rohrteile bezeichnet.

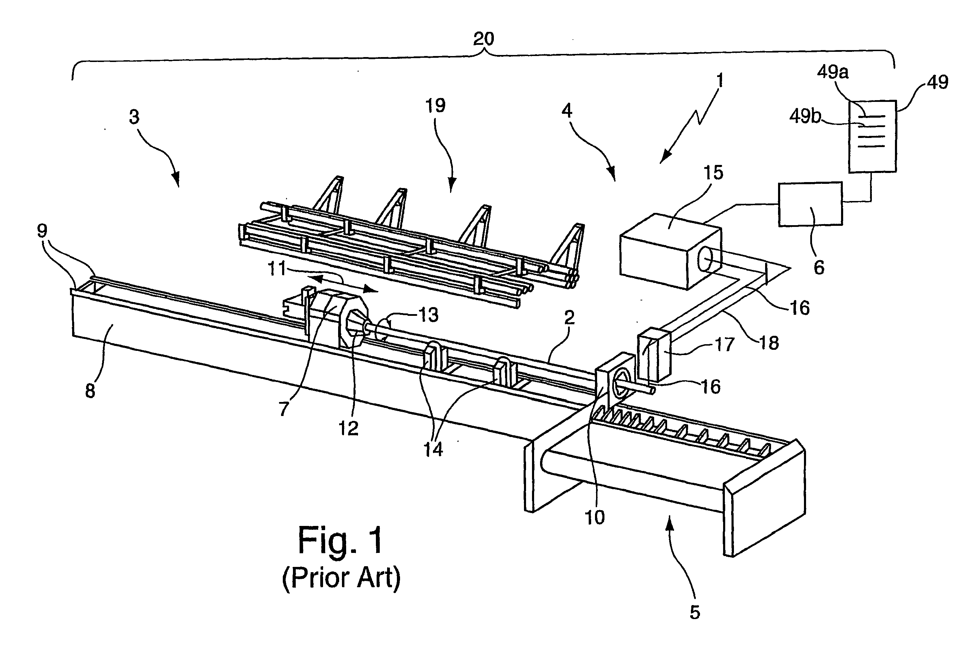

**Fig. 1** zeigt eine als "TruLaser Tube" bekannte Bearbeitungsanlage **1** zum Laserschneiden von Rohren **2,** die als Laserschneidanlage bezeichnet wird und zur Bearbeitung von Rohren mit einer beliebigen Querschnittsform ausgebildet ist. Die gezeigte Laserschneidanlage 1 umfasst eine Zuführvorrichtung **3** zur seitlichen Zufuhr eines zu schneidenden Rohrs 2 zu der Laserschneidanlage 1, eine Bearbeitungsvorrichtung **4** zum Laserschneiden von Rohrteilen aus dem Rohr 2 und eine Entladevorrichtung **5** zum Entladen der geschnittenen Rohrteile aus der Laserschneidanlage 1. Alle wesentlichen Funktionen der Laserschneidanlage 1 werden mittels einer numerischen Steuerungsvorrichtung **6** gesteuert.

Die Zuführvorrichtung 3 umfasst eine als Werkstück-Bewegungseinrichtung dienende Dreh- und Vorschubeinrichtung **7** sowie ein Maschinenbett **8** mit Führungsschienen **9** und eine Durchschiebeeinrichtung **10.** Die Dreh- und Vorschubeinrichtung 7 ist motorisch angetrieben in Vorschubrichtung **11** auf den Führungsschienen 9 verfahrbar. An der einem zuzuführenden Rohr 2 zugewandten Seite weist die Dreh- und Vorschubeinrichtung 7 eine Spanneinrichtung **12** auf, die in Richtung des Doppelpfeils **13** gesteuert drehbar ist und das zugeführte Rohr 2 von außen umfasst und ortsfest klemmt. Das zugeführte Rohr 2 wird von einer in das Maschinenbett 8 integrierten Werkstückabstützung **14** abgestützt. Im Bereich der Bearbeitungsvorrichtung 4 wird das Rohr 2 durch die Durchschiebeeinrichtung 10 geführt. Die Durchschiebeeinrichtung 10 ist so ausgelegt, dass das eingespannte Rohr 2 in Vorschubrichtung 11 geführt und nicht ortsfest geklemmt ist. Das Rohr 2 ist in der Durchschiebeeinrichtung 10 um die Drehachse 13 drehbar.

Die Bearbeitungsvorrichtung 4 umfasst eine Laserstrahlquelle **15** zum Erzeugen eines Laserstrahls **16,** einen Bearbeitungskopf **17** und eine Strahlführung **18,** die den Laserstrahl 16 von der Laserstrahlquelle 15 zum Bearbeitungskopf 17 führt. Der Laserstrahl 16 tritt aus dem Bearbeitungskopf 17 aus und wird auf die Außenumfangsfläche des eingespannten Rohrs 2 fokussiert. Auf der dem Maschinenbett 8 abgewandten Seite der Durchschiebeeinrichtung 10 ist die Entladevorrichtung 5 vorgesehen, die die aus dem Rohr 2 geschnittenen Rohrteile sowie das Restrohr aus der Laserschneidanlage 1 abführt.

Um die Produktivität der Laserschneidanlage 1 zu erhöhen, weist die in Fig. 1 gezeigte Laserschneidanlage 1 eine Beladevorrichtung **19** als Automatisierungskomponente auf, mit der ein Rohr 2 automatisch in eine Übergabeposition befördert und an die Zuführvorrichtung 3 der Laserschneidanlage 1 übergeben wird. Die maschinelle Anordnung aus Laserschneidanlage 1 und der Beladevorrichtung 19 wird als Fertigungszelle 20 (Flexible Manufacturing Cell, abgekürzt FMC) bezeichnet.

Wenn das über die Beladevorrichtung 19 zugeführte Rohr 2 in der Übergabeposition angeordnet ist, befindet sich die Dreh- und Vorschubeinrichtung 7 zunächst in einer bearbeitungskopffernen Ausgangsstellung. Zur Rohrbearbeitung verfährt die Dreh- und Vorschubeinrichtung 7 aus ihrer Position mit geöffneter Spanneinrichtung 12 so weit in Richtung auf das zugeführte Rohr 2 zu, bis das dem Bearbeitungskopf 17 abgewandte Ende des Rohrs 2 innerhalb der Spanneinrichtung 12 zu liegen kommt. Die Spanneinrichtung 12 wird geschlossen und dadurch das Rohr 2 an der Dreh- und Vorschubeinrichtung 7 ortsfest geklemmt. Die Dreh- und Vorschubeinrichtung 7 und das Rohr 2 bewegen sich gemeinsam in Richtung auf den Bearbeitungskopf 17. Dabei läuft das Rohr 2 mit seinem dem Bearbeitungskopf 17 zugewandten Ende zunächst in die Durchschiebeeinrichtung 10 ein und wird in Vorschubrichtung 11 durch die Durchschiebeeinrichtung 10 hindurch bewegt, wobei das Rohr 2 in der Durchschiebeeinrichtung 10 um die Drehachse 13 drehbar ist. Das Rohr 2 wird durch die Verfahrbewegung der Dreh- und Vorschubeinrichtung 7 in Vorschubrichtung 11 gegenüber dem Bearbeitungskopf 17 in die gewünschte Bearbeitungsposition zugestellt.

Die Steuerung von Bearbeitungsanlagen erfolgt mit Hilfe numerischer Steuerungen, die auch als NC-Steuerungen bezeichnet werden, wobei NC als Abkürzung für den englischen Begriff "Numerical Control" steht. Festverdrahtete NC-Steuerungen wurden seit Anfang der 1970er Jahre durch computergesteuerte NC-Steuerungen, die als CNC-Steuerungen (Computerized Numerical Control) bezeichnet werden, ersetzt. Moderne NC-Steuerungen basieren ausschließlich auf Mikroprozessortechnik, so dass die Begriffe NC-Steuerung und CNC-Steuerung praktisch synonym verwendet werden. Ein wesentlicher Vorteil von NC-Steuerungen auf Mikroprozessortechnik besteht darin, dass einheitliche und in großen Stückzahlen vorhandene Hardwarekomponenten durch Implementierung unterschiedlicher Softwarekomponenten an spezielle Bearbeitungsanlagen und Fertigungsaufgaben angepasst werden können. Der aktuelle Stand moderner NC-Steuerungen ist bspw. im Lehrbuch von Manfred Weck, Werkzeugmaschinen Fertigungssysteme, Band 4 "Automatisierung von Maschinen und Anlagen", Springer-Verlag beschrieben.

NC-Steuerungen werden im Allgemeinen in drei Steuereinheiten aufgeteilt:
■ MMC-Steuereinheit (Man-Machine-Communication) als Dateneingabe- und Visualisierungseinheit
■ Anpass-Steuereinheit als zentrale Steuereinheit, die auch als SPS oder PLC bezeichnet wird, wobei SPS als Abkürzung für den Begriff speicherprogrammierbare Steuerung steht, der im Englischen als Programmable Logic Controller, abgekürzt PLC, bezeichnet wird.
■ NC-Steuereinheit

Über die MMC-Steuereinheit eingegebene Daten bzw. Steuerbefehle werden in der NC-Steuereinheit decodiert und nach geometrischen Daten, technologischen Daten und Schaltfunktionen getrennt weiter verarbeitet. Geometrische Daten beinhalten bspw. Weginformationen über die zu verfahrenden Werkzeug- und Werkstückwege (Bearbeitungskopf- und Rohrbewegung), während technologische Daten bspw. Bearbeitungsparameter, wie Vorschubgeschwindigkeit und Laserstrahlleistung beinhalten. Schaltbefehle steuern bspw. Werkzeugwechsel, Teilebeschickung (Rohrbeladen) und Teileentnahme (Rohrteilentladen). Schaltbefehle werden an die SPS-Steuereinheit weitergegeben, wo sie mit von der Bearbeitungsanlage kommenden Rückmeldungen verknüpft und nach Maßgabe des schrittweise abgearbeiteten Steuerprogramms in Steuerbefehle für die zu schaltenden Aggregate umgesetzt werden. Die geometrischen und technologischen Daten erzeugen nach Aufruf durch die NC-Steuereinheit entsprechende Achsbewegungsbefehle für die Bearbeitungsanlage. Die NC- und SPS-Steuereinheiten übermitteln den aktuellen Maschinenstatus zur Visualisierung an die MMC-Steuereinheit.

Die drei Steuereinheiten, MMC-, SPS- und NC-Steuereinheit, wurden früher wegen begrenzter Prozessorleistung als separate Prozessoren (Mehrprozessortechnik) realisiert. Moderne Prozessoren sind so leistungsfähig, dass auch ein einzelner Prozessor (sogenannte Einprozessortechnik) die erforderlichen Leistungen zur Verfügung stellen kann. Bei NC-Steuerungen mit Einprozessortechnik findet eine Trennung der MMC-, SPS- und NC-Steuereinheiten nur noch auf Softwareebene statt.

Zur Steuerung einer Bearbeitungsanlage benötigt die NC-Steuerung ein geeignetes Steuerprogramm, das auch als NC-Programm bezeichnet wird. Jede Anweisung an eine Bearbeitungsanlage wird - codiert nach DIN-Code - in Form von sogenannten Funktionen ausgedrückt. Grundlegende Funktionen, die für jedes Bearbeitungsverfahren gebraucht werden, sind in internationalen Richtlinien, speziell in der DIN-Norm 66025, festgeschrieben. Zu den grundlegenden Funktionen gehören Verfahrinformationen zu einer definierten Position, geometrische Informationen, die den Konturverlauf eines Teils (Blechteil, Rohrteil) beschreiben, und technologische Informationen für die Fertigung der Kontur (z.B. Laserschneiden). Neben den grundlegenden Funktionen, die im DIN-Code definiert sind, entwickeln Maschinenhersteller spezielle NC-Funktionen für ihre Bearbeitungsanlagen und die zugehörigen Bearbeitungsverfahren. Beim Laserschneiden von Rohren sind bspw. für verschiedene Wandstärken unterschiedliche Einstechmethoden notwendig, die jeweils über eine eigene NC-Funktion aufgerufen werden können.

Um NC-Programme automatisch zu erstellen, entwickelten Maschinenhersteller und Softwareunternehmen sogenannte Programmiersysteme. Programmiersysteme kennen die grundlegenden und speziellen NC-Funktionen und wissen, welche Technologiedaten benötigt werden und welche Regeln für die Bearbeitung gelten. Damit können sie die Bearbeitung automatisch definieren und ein NC-Programm generieren. Spezielle NC-Funktionen werden im Programmiersystem des Maschinenherstellers hinterlegt und dokumentiert, so dass ein Programmierer eine NC-Funktion nutzen kann, ohne ihren DIN-Code zu kennen. Ein Programmierer benötigt heute selbst keine klassischen Programmierkenntnisse, sein Expertenwissen besteht vielmehr darin, die optimalen Bearbeitungsparameter und Bearbeitungsstrategien zu finden.

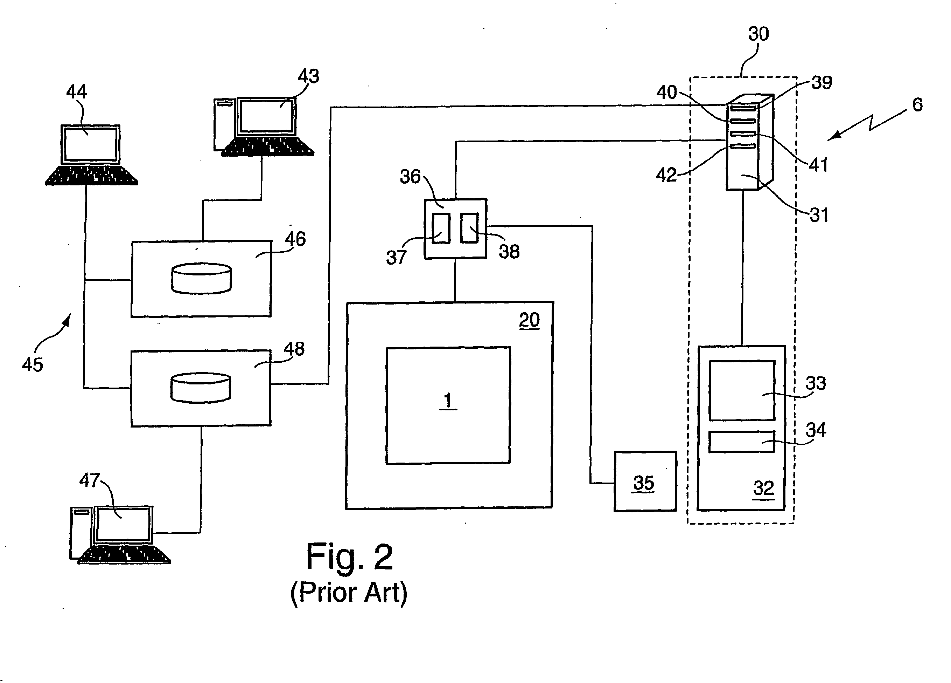

Fig. 2 zeigt die numerische Steuerungsvorrichtung 6 der Laserschneidanlage 1 von Fig. 1, die sämtliche Hardware- und Softwarekomponenten umfasst, die zur Steuerung der Laserschneidanlage 1 und der Fertigungszelle 20 dienen.

Die Steuerungsvorrichtung 6 umfasst hardwareseitig eine MMC-Steuereinheit 30 mit einem bspw. als Industrie-PC ausgebildeten Steuerungscomputer 31 und einer Bedieneinrichtung **32** mit einem Bildschirm **33** als Anzeigeeinheit und einer Tastatur **34** als Eingabeeinheit, sowie eine Maschinensteuertafel **35** zur manuellen Bedienung der Laserschneidanlage 1 und der Fertigungszelle 20 und eine NCU-Baugruppe 36 (Numerical Control Unit) mit integrierter NC-Steuereinheit 37 und SPS-Steuereinheit **38.** Alle Hardwarekomponenten der Steuerungsvorrichtung 6 sind über ein Bussystem (nicht gezeigt) miteinander vernetzt, an das weitere Steuerungskomponenten angeschlossen werden können. Die MMC-Steuereinheit 30 und die NCU-Baugruppe 36 mit NC- und SPS-Steuereinheiten 37, 38 sind im Ausführungsbeispiel als zwei separate Komponenten ausgebildet. Alternativ können die MMC-, NC- und SPS-Steuereinheiten 30, 37, 38 als drei separate Komponenten oder in Einprozessortechnik als ein gemeinsamer Prozessor ausgebildet sein. Der Steuerungscomputer 31 und die NCU-Baugruppe 36 können in einem zu der Laserschneidanlage 1 zugehörigen Schaltschrank (nicht gezeigt) angeordnet sein.

Die Steuerungsvorrichtung 6 umfasst softwareseitig eine Bediensoftware zur Steuerung der Automatisierungskomponenten (Beladevorrichtung 19) sowie Softwaremodule zur Auftragsverwaltung, Werkzeugverwaltung und Palettenverwaltung umfassen, die als Bediensoftware **39** für die Fertigungszelle (Fertigungszellen-Bediensoftware, FMC-Software) zusammengefasst werden. Auf dem Steuerungscomputer 31 sind neben der FMC-Software 39 für die Fertigungszelle eine Bediensoftware **40** für die Laserschneidanlage (Maschinen-Bediensoftware, MMC-Software), eine Programmverwaltung **41** zur Verwaltung der NC-Programme und ggf. weitere Anwendungen, wie bspw. ein Programmiersystem 42, installiert.

Um ein NC-Programm für ein zu schneidendes Rohrteil, das als NC-Teileprogramm bezeichnet wird, in einem Programmiersystem erstellen zu können, benötigt der Programmierer eine Konstruktionszeichnung des Rohrteils, die in das Programmiersystem geladen wird. Die Konstruktion eines Rohrteils erfolgt mit Hilfe eines Konstruktionssystems **43** (CAD-System) oder eines kombinierten Konstruktions- und Programmiersystems **44** (CAD-/CAM-System), wobei die Abkürzungen CAD und CAM für Computer Aided Design und Computer Aided Manufacturing stehen. Fertige Konstruktionszeichnungen werden auf einer dafür in einem Netzwerk **45** vorgesehenen gemeinsamen CAD-Datenablage **46** abgelegt, auf die die Programmierer bei Bedarf zugreifen können.

Ein NC-Teileprogramm zum Laserschneiden eines Rohrteils kann auf zwei unterschiedliche Arten erstellt werden. Im ersten Fall wird das NC-Teileprogramm in der Arbeitsvorbereitung mit Hilfe eines Programmiersystems erstellt und an die Steuerungsvorrichtung 6 übertragen. Bereits eingelesene NC-Teileprogramme können über die Bedieneinrichtung 32 nachträglich verändert oder korrigiert werden. Im zweiten Fall erstellt der Maschinenbediener das NC-Teileprogramm manuell an der Bedieneinrichtung 32 der MMC-Steuereinheit 30. Bei dem in Fig. 2 gezeigten Ausführungsbeispiel sind neben dem Programmiersystem 42 auf dem Steuerungscomputer 31 weitere Programmiersysteme im Netzwerk 45 in Form eines kombinierten Konstruktions- und Programmiersystems 44 (CAD-/CAM-System) und eines reinen Programmiersystems **47** (CAM-System) installiert. Der Steuerungscomputer 31 und die Programmiersysteme 42, 44, 47 sind mit einer CAM-Datenablage **48** verbunden, auf die die Programmierer und Maschinenbediener zugreifen können. Der Programmierer legt die fertigen NC-Teileprogramme in der CAM-Datenablage 48 ab. Der Maschinenbediener kann auf die CAM-Datenablage 48 zugreifen und die NC-Teileprogramme aus der CAM-Datenablage 48 in die Programmverwaltung 41 des Steuerungscomputers 31 importieren. Der Datentransfer der NC-Teileprogramme in die Programmverwaltung 41 kann auch über ein Speichermedium wie eine CD-ROM oder einen USB-Stick erfolgen, so dass auch NC-Teileprogramme in die Programmverwaltung 41 importiert werden können, die nicht in der CAM-Datenablage 48 abgelegt sind.

Um ein Rohrteil auf der Laserschneidanlage 1 herzustellen, erstellt der Maschinenbediener in der FMC-Software 39 eine in Fig. 1 schematisch angedeutete Auftragstabelle **49,** in der für jedes Rohrteil ein Teileauftrag **49a, 49b** angelegt wird, in dem neben dem Programmnamen des zugehörigen NC-Teileprogramms die Stückzahl des Rohrteils angegeben ist. Den Teileaufträgen 49a, 49b wird beim Anlegen ein Status "gesperrt" oder "frei" zugeordnet. Auf der Laserschneidanlage 1 werden nur freigegebene Teileaufträge bearbeitet, also Teilaufträge, die den Status "frei" aufweisen. Gesperrte Teileaufträge, also Teilaufträge, die den Status "gesperrt" aufweisen, können nicht bearbeitet werden und werden bei der automatischen Rohrbelegung daher nicht berücksichtigt. Die FMC-Software 39 zeigt in der Auftragstabelle 49 den Status "aktiv" an, wenn ein freigegebener Teileauftrag an der Laserschneidanlage 1 bearbeitet wird. Ein Teileauftrag, der ordnungsgemäß abgearbeitet wurde, weist in der Auftragstabelle 49 den Status "beendet" auf.

Um die Belegung eines Rohrs 2 mit Rohrteilen flexibel zu gestalten, sind weder das Beladen der Laserschneidanlage 1 mit einem Rohr 2 noch das Entladen eines Restrohrs innerhalb eines NC-Teileprogramms für ein zu schneidendes Rohrteil definiert. Das NC-Teileprogramm definiert die Bearbeitung des Rohrteils durch Laserschneiden und das Ausschleusen des geschnittenen Rohrteils aus der Laserschneidanlage 1, wohingegen das Beladen der Laserschneidanlage 1 mit dem Rohr 2 und das Entladen des Restrohrs aus der Laserschneidanlage 1 durch NC-Funktionen gesteuert werden, die in Beladeprogrammen und Entladeprogrammen abgespeichert sind.

Die Schnitte, die das Laserschneiden eines Rohrteils definieren, sind in einen Anfangstrennschnitt zum Schneiden der Anfangsgeometrie des Rohrteils, einen Endtrennschnitt zum Schneiden der Endgeometrie und ggf. einen Konturschnitt zum Schneiden von Konturen auf dem Rohrteil unterteilt. Ein gemeinsamer Trennschnitt (GTS) zwischen Rohrteilen liegt vor, wenn der Anfangstrennschnitt eines Rohrteils gleichzeitig den Endtrennschnitt des vorhergehenden Rohrteils darstellt.

Die bekannte Laserschneidanlage 1 und das zugehörige Programmiersystem "TruToPs Tube" unterscheiden zwischen vier NC-Programmen für das Laserschneiden eines Rohrteils: Bearbeitungsprogramm ohne gemeinsamen Trennschnitt (Normalprogramm), Bearbeitungsprogramm mit gemeinsamem Trennschnitt (GTS-Programm), Besäumprogramm und Zuschnittprogramm. Das Normalprogramm umfasst den Anfangstrennschnitt, den Konturschnitt und den Endtrennschnitt des Rohrteils. Die NC-Programme "GTS-Programm" und "Besäumprogramm" werden angewandt, wenn benachbarte zu schneidende Rohrteile einen gemeinsamen Trennschnitt aufweisen. Dabei führt das Besäumprogramm den Anfangstrennschnitt und das GTS-Programm den Konturschnitt und den Endtrennschnitt des Rohrteils aus. Die Bearbeitung mit gemeinsamem Trennschnitt wurde eingeführt, um den Bearbeitungsaufwand zu reduzieren und Material einzusparen. Das Zuschnittprogramm dient zum Ausführen des Anfangstrennschnitts und des Konturschnitts des letzten Rohrteils 54.

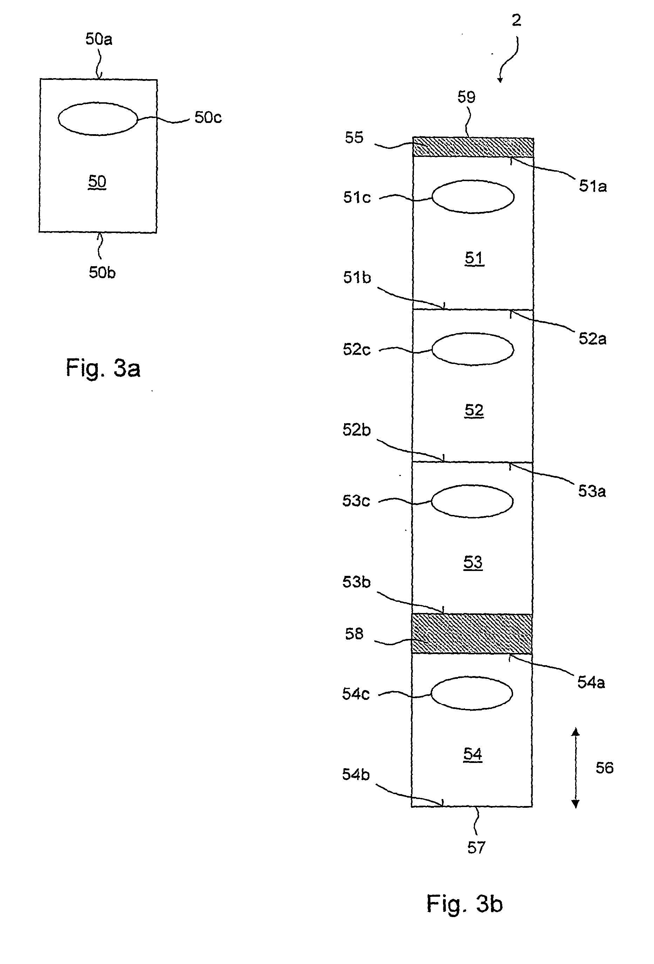

**Fig. 3a** zeigt ein Rohrteil **50** mit einer 90°-Geometrie als Anfangsgeometrie **50a,** einer 90°-Geometrie als Endgeometrie **50b** und einer Kontur **50c,** die auf dem Rohrteil 50 angeordnet ist. **Fig. 3b** zeigt die Belegung eines Rohrs 2 mit vier gleichen Rohrteilen 50, die hintereinander als erstes, zweites, drittes und viertes Rohrteil **51, 52, 53, 54** auf dem Rohr 2 angeordnet sind und die die Anfangsgeometrien **51a-54a,** die Konturen **51c-54c** und die Endgeometrien **51b-54b** aufweisen. Zur Herstellung der vier gleichen Rohrteile 51, 52, 53, 54 benötigt die bekannte Laserschneidanlage 1 drei NC-Programme, nämlich ein Besäumprogramm, ein GTS-Programm und ein Zuschnittprogramm. Das Besäumprogramm führt den Anfangstrennschnitt der Anfangsgeometrie 51 a des ersten Rohrteils 51 aus und das GTS-Programm den Konturschnitt der Kontur 51 c und den Endtrennschnitt der Endgeometrie 51 b des ersten Rohrteils 51. Das GTS-Programm wird ein zweites und drittes Mal ausgeführt und erzeugt die Konturschnitte der Konturen 52, 53c und die Endtrennschnitte der Endgeometrien 52b, 53b des zweiten und dritten Rohrteils 52, 53. Das vierte und letzte Rohrteil 54 wird mit dem Zuschnittprogramm hergestellt, das den Anfangstrennschnitt der Anfangsgeometrie 54a und den Konturschnitt der Kontur 54c des letzten Rohrteils 54 ausführt. Da gemeinsame Trennschnitte zwischen erstem und zweiten Rohrteil 51, 52 sowie zwischen zweitem und drittem Rohrteil 52, 53 möglich sind, sind separate Anfangstrennschnitte für das zweite und dritte Rohrteil 52, 53 nicht erforderlich. Da die Rohrlängen in der Regel nicht exakt bekannt sind, wird am Anfang des Rohrs 2 ein Streifen **55** abgeschnitten, um einen definierten Nullpunkt zu erzeugen. Bei dem vierten Rohrteil 54 ist zu berücksichtigen, dass das Rohr 2 in einem Totbereich **56,** in dem die Spanneinrichtung 12 der Laserschneidanlage 1 das Rohr 2 spannt, nicht durch Laserschneiden bearbeitet werden kann. Da im Totbereich 56 der Spanneinrichtung 12 kein Endtrennschnitt mit dem Laserstrahl durchgeführt werden kann, wird, sofern die Geometrie des Rohrendes **57** identisch der Endgeometrie **54b** des vierten Rohrteils 54 ist, das Rohrende 57 als Endgeometrie 54b des vierten Rohrteils 54 definiert und der Anfangstrennschnitt legt den Anfang des vierten Rohrteils 54 fest. Das Restmaterial **58** entsteht zwischen dem dritten und vierten Rohrteil 53, 54. Für den Fall, dass das Rohrende 57 nicht identisch der Endgeometrie 54b des vierten Rohrteils 54 ist, kann das Rohr 2 im Totbereich 56 der Spanneinrichtung 12 nicht verwendet und folglich das vierte Rohrteil 54 nicht gefertigt werden. Für den Fall, dass die Anfangsgeometrie 51a des ersten Rohrteils 51 eine 90°-Geometrie darstellt und der Rohranfang **59** der Anfangsgeometrie 51a des ersten Rohrteils 51 entspricht, kann das Besäumprogramm entfallen.

Aus US 2008/016696 A1 ist eine Vorrichtung zum Schneiden eines Rohrs bekannt, die ein Gehäuse mit einer zentralen Öffnung zum Halten des Rohrs in einer fixierten Position umfasst. Ein drehbarer Hals ist an der Außenfläche des fixierten Gehäuses angebracht, wobei an dem Hals ein Schneidkopf befestigt ist. Der Schneidkopf ist zur Vorwärts- und Rückwärtsverschiebung in der Weise ausgestaltet, dass die Kombination der Rotationsbewegung des Halses und der translatorischen Bewegung des Schneidkopfes in der Lage ist, komplexe Schnitte ohne jede Bewegung des Rohrs auszuführen.

Aus US 2003/023341 A1 ist es bekannt, in einem NC-Programm sämtliche Bearbeitungsbefehle für ein Werkstückteil, z.B. für Anfangs- und Endtrennschnitt, vorzusehen. Dabei sind die Bearbeitungsparameter nicht direkt im NC-Programm, sondern in einer Technologietabelle hinterlegt. Vor oder während dem Abarbeiten des NC-Programms an der Maschine müssen dann die offen gelassenen Schneidparameter aus den an der Maschine hinterlegten Technologietabellen ausgelesen werden.

Aus US 2002/072824 A1 ist ein Softwaresystem bekannt, um automatisch eine Vielzahl von einzelnen Teile-Unterprogrammen zu verschachteln, die in eine Maschinensteuerung einzeln eingegeben werden, um eine optimale Anordnungsdichte auf einem Ausgangsblech zu erreichen.

Aus EP 0 871 100 A2 ist schließlich eine automatische Schachtelungsvorrichtung bekannt, die die Anordnung einer Vielzahl von zu schneidenden Werkstücken auf einem rechteckigen Ausgangsblech bestimmt.

Die Aufgabe der Erfindung besteht demgegenüber darin, ein Verfahren zur Steuerung einer Laserschneidanlage dahingehend weiterzubilden, dass die für das Schneiden mehrerer Rohrteile aus einem Rohr erforderliche Anzahl an verschiedenen NC-Programmen für ein zu schneidendes Rohrteil reduziert wird.

Diese Aufgabe wird erfindungsgemäß durch ein Verfahren gemäß Anspruch 1 gelöst.

Das erfindungsgemäße NC-Teileprogramm ersetzt die NC-Programme "Normalprogramm", "Besäumprogramm", "GTS-Programm " und "Zuschnittprogramm" der bekannten Laserschneidanlage 1. Alle gleichen Rohrteile eines Rohrs werden erfindungsgemäß mit einem einzigen NC-Teileprogramm bearbeitet, unabhängig von der Position des Rohrteils auf dem Rohr, d.h. unabhängig davon, ob es sich um das erste Rohrteil auf dem Rohr, das letzte Rohrteil oder ein mittleres Rohrteil handelt.

Unter den Bearbeitungsrandbedingungen, dass bei zwei benachbarten zu schneidenden Rohrteilen die Endgeometrie des ersten Rohrteils und die Anfangsgeometrie des zweiten Rohrteils identisch sind und dass ein Einstechen des Laserstrahls auf der Endgeometrie des ersten Rohrteils und auf der Anfangsgeometrie des zweiten Rohrteils zugelassen ist, wird vorteilhaft entweder der programmierte Endtrennschnitt des ersten Rohrteils oder der programmierte Anfangstrennschnitt des zweiten Rohrteils in dem NC-Teileprogramm des ersten bzw. zweiten Rohrteils deaktiviert und daher bei der Bearbeitung nicht ausgeführt.

Bei einem zu schneidenden Rohrteil, das im Totbereich der Laserschneidanlage angeordnet ist, wird vorteilhaft unter den Bearbeitungsrandbedingungen, dass die Endgeometrie des Rohrteils der Geometrie des Rohrendes entspricht und auf dem Rohrende angeordnet ist, der programmierte Endtrennschnitt des Rohrteils in dem NC-Teileprogramm des Rohrteils deaktiviert und daher bei der Bearbeitung nicht ausgeführt.

Bei dem zu schneidenden Rohrteil, das im Totbereich der Laserschneidanlage angeordnet ist, wird vorteilhaft unter der Bearbeitungsrandbedingung, dass zwischen der Anfangsgeometrie des Rohrteils und der Endgeometrie des vorhergehenden Rohrteils ein Spalt besteht, der Anfangstrennschnitt des Rohrteils in dem NC-Teileprogramm aktiviert und daher bei der Bearbeitung ausgeführt.

Bei dem ersten zu schneidenden Rohrteil wird vorteilhaft unter der Bearbeitungsrandbedingung, dass die Geometrie des Rohranfangs identisch der Anfangsgeometrie des ersten Rohrteils ist, der programmierte Anfangstrennschnitt des ersten Rohrteils in dem NC-Teileprogramm des ersten Rohrteils deaktiviert und daher bei der Bearbeitung nicht ausgeführt.

Der Anfangstrennschnitt, der Konturschnitt und der Endtrennschnitt sind bevorzugt als separate Unterprogramme programmiert, die vorteilhaft aus einer Datenbank auswählbar sind.

Besonders bevorzugt sind eine oder mehrere der Rohrteileigenschaften "GTS-fähig zu dem gleichen Rohrteil", "GTS-fähig zu anderen Rohrteilen", "zuschnittfähig", "drehbar um A-Versatz", "verschiebbar um X-Versatz" und "kippbar" in dem NC-Teileprogramm des Rohrteils definiert. Die Rohrteileigenschaft "GTS-fähig zu dem gleichen Rohrteil" ist dadurch definiert, dass ein Einstechen des Laserstrahls auf der Anfangs- und Endgeometrie des Rohrteils erfolgen kann, eine Verschiebung des Rohrteils um einen X-Versatz möglich ist und dass die Anfangs- und Endgeometrien des Rohrteils identisch sind. Die Rohrteileigenschaft "GTS-fähig zu anderen Rohrteilen" ist dadurch definiert, dass ein Einstechen des Laserstrahls auf der Anfangs- und Endgeometrie des Rohrteils erfolgen kann und eine Verschiebung des Rohrteils um einen X-Versatz möglich ist. Die Rohrteileigenschaft "zuschnittfähig" ist dadurch definiert, dass im Totbereich der Spanneinrichtung kein Konturschnitt erfolgt und dass die Endgeometrie des Rohrteils mit dem Rohrende, insbesondere mit einer 90°-Geometrie übereinstimmt.

Die Erfindung ist auch realisiert in einem Computerprogrammprodukt zur Durchführung des oben beschriebenen Verfahrens zur Steuerung einer Laserschneidanlage.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine bekannte Laserschneidanlage zum Schneiden von Rohren;
- Fig. 2: die numerische Steuerungsvorrichtung der in Fig. 1 gezeigten bekannten Laserschneidanlage;
- Fign. 3a,b: ein Rohrteil und ein Rohr mit allen Schnitten, die zum Schneiden von vier gleichen Rohrteilen aus einem Rohr mittels bekannter NC-Programme erforderlich sind;
- Fig. 4a-e: zwei verschiedene Rohrteile sowie ungeschachtelte und geschachtelte Anordnungen der Rohrteile, um die Rohrteileigenschaften, die der Programmierer beim Erstellen eines erfindungsgemäßen NC-Teileprogramms definiert, zu erläutern;
- Fig. 5: in Form eines Ablaufdiagramms die einzelnen Schritte eines Verfahrens zur Optimierung der Belegung eines Rohrs mit mehreren zu schneidenden Rohrteilen;
- Fign. 6a,b: in Form eines Ablaufdiagramms die einzelnen Schritte einer ersten Ausführungsform des erfindungsgemäßen Verfahrens zur Steuerung einer Laserschneidanlage; und
- Fig. 7: in Form eines Ablaufdiagramms die einzelnen Schritte einer zweiten Ausführungsform des erfindungsgemäßen Verfahrens zur Steuerung einer Laserschneidanlage.

Beim Erstellen eines erfindungsgemäßen NC-Teileprogramms für ein zu schneidendes Rohrteil definiert der Programmierer Rohrteileigenschaften, die angeben, ob der Anfangstrennschnitt und/oder der Endtrennschnitt des Rohrteils deaktiviert werden können. Zu den Rohrteileigenschaften gehören: "GTS-fähig zu dem gleichen Rohrteil", "GTS-fähig zu anderen Rohrteilen", "zuschnittfähig", "drehbar um A-Versatz", "verschiebbar um X-Versatz" und "kippbar bzw. spiegelbar". Dabei steht GTS als Abkürzung für den Begriff "gemeinsamer Trennschnitt".

Ein Rohrteil ist GTS-fähig zu dem gleichen Rohrteil, wenn ein Einstechen des Laserstrahls auf der Anfangsgeometrie und der Endgeometrie des Rohrteils zugelassen ist, eine entsprechende Verschiebung des Rohrteils erlaubt ist und die die Anfangsgeometrie und die Endgeometrie des Rohrteils übereinstimmen. Ein Rohrteil ist GTS-fähig zu einem anderen Rohrteil, wenn ein Einstechen des Laserstrahls auf der Anfangsgeometrie und der Endgeometrie des Rohrteils zugelassen ist und eine entsprechende Verschiebung des Rohrteils erlaubt ist. Ein Trennschnitt kann aber nur dann als gemeinsamer Trennschnitt ausgeführt werden, wenn außerdem die Anfangsgeometrie des Rohrteils mit der Endgeometrie des vorhergehenden Rohrteils übereinstimmt. Da die Reihenfolge der zu schneidenden Rohrteile auf dem Rohr beim Erstellen der NC-Teileprogramme noch nicht bekannt ist, kann die Entscheidung, einen Trennschnitt als gemeinsamen Trennschnitt auszuführen und den Anfangstrennschnitt eines Rohrteils zu deaktivieren, erst später getroffen werden. Ein Rohrteil ist zuschnittfähig, wenn im Totbereich 56 der Spanneinrichtung 12 kein Konturschnitt erfolgt und die Endgeometrie des Rohrteils eine 90°-Geometrie darstellt und mit dem Rohrende übereinstimmt. Das Rohr 2 wird bei der Bearbeitung über die Spanneinrichtung 12 eingespannt und kann in dem Bereich, in dem die Spanneinrichtung 12 das Rohr 2 umfasst, nicht mit dem Laserstrahl 16 bearbeitet werden. Der Totbereich 56 stellt einen maschinenspezifischen Parameter dar, der sich von Bearbeitungsanlage zu Bearbeitungsanlage unterscheiden kann.

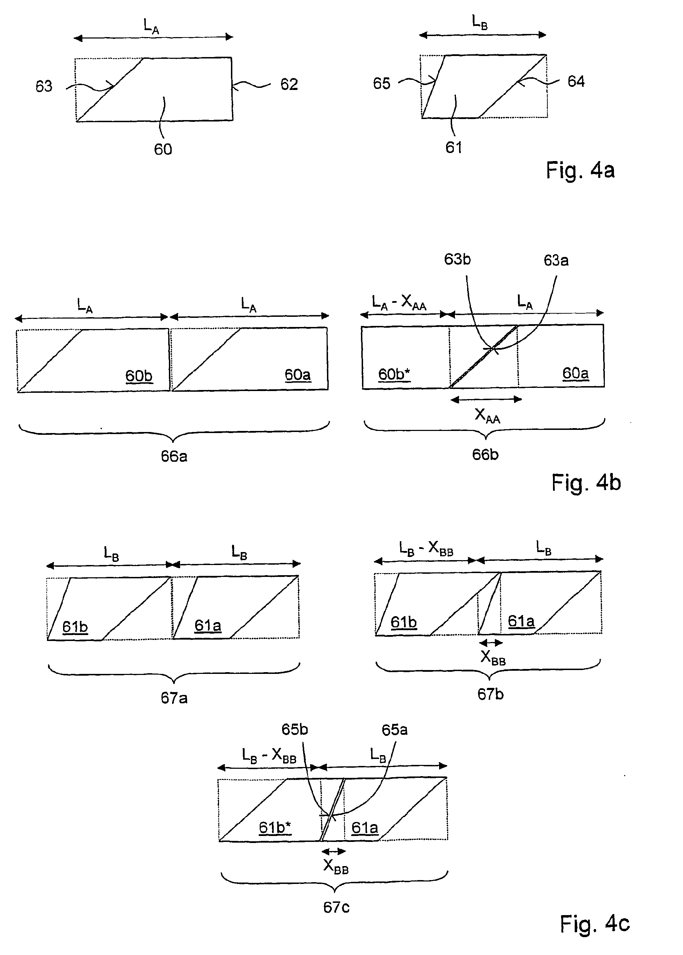

**Fig. 4a** zeigt ein erstes und ein zweites Rohrteil **60, 61** mit ihren Anfangs- und Endgeometrien. Das erste Rohrteil 60 weist als Anfangsgeometrie 62 einen 90°-Trennschnitt und als Endgeometrie **63** einen 45°-Trennschnitt auf, während das zweite Rohrteil 61 als Anfangsgeometrie **64** einen 45°-Trennschnitt und als Endgeometrie 65 einen 60°-Trennschnitt aufweist. Da die Endgeometrien 63, 65 der beiden Rohrteile 60, 61 einen Schrägschnitt ungleich 90° darstellen, sind beide Rohrteile 60, 61 nicht "zuschnittfähig". Damit ein Rohrteil zuschnittfähig sein kann, muss die Endgeometrie des Rohrteils dem Rohrende, das eine 90°-Geometrie darstellt, entsprechen.

Am Beispiel der beiden Rohrteile 60, 61 aus Fig. 4a werden die weiteren Rohrteileigenschaften "drehbar um A-Versatz", "verschiebbar um X-Versatz" und "kippbar" erläutert:
Die Rohrteileigenschaften "drehbar um A-Versatz" und "verschiebbar um X-Versatz" geben an, ob und wie weit ein Rohrteil bei einer Schachtelung um die Drehachse 13 (A-Versatz) gedreht und in Vorschubrichtung 11 verschoben (X-Versatz) werden kann. Die Drehbarkeit ist beispielsweise bei Rohren mit einer Schweißnaht in Längsrichtung von Bedeutung. Wenn die Längsnaht bei allen geschnittenen Rohrteilen die gleiche Ausrichtung ausweisen soll, dürfen die Rohrteile bei der Rohrbelegung nicht gegeneinander verdreht werden und die Rohrteile sind nicht drehbar. Rundrohre sind aufgrund der Zylindersymmetrie um die Rohr- bzw. Drehachse 13 um einen beliebigen Winkel drehbar, während Rechteckrohre um ein ganzzahliges Vielfaches von 180° drehbar sind; Rohre mit einer quadratischen Querschnittsfläche stellen einen Spezialfall der Rechteckrohre dar und sind um ein ganzzahliges Vielfaches von 90° drehbar. Die Verschiebbarkeit ist beispielsweise bei Rohrteilen von Bedeutung, die im Bereich der Anfangs- und Endgeometrien hohe Anforderungen an die Oberflächenqualität stellen. Durch das Einstechen des Laserstrahls an der Anfangs- und Endgeometrie trifft ein Teil des Laserstrahls 16 auf das Rohr, bspw. auf die gegenüberliegende Rohrinnenseite, und kann dort zu einer Verfärbung des Rohrteils führen. Wenn eine Verfärbung des Rohrteils im Bereich der Anfangs- und Endgeometrien unerwünscht ist, darf das Rohrteil nicht oder nur in einem begrenzten Bereich verschoben werden. Gleiches gilt, wenn die Qualität eines Rohrteils nicht durch Schmelzspritzer, die beim Einstechen des Laserstrahls 16 entstehen, beeinträchtigt werden soll.
Die Rohrteileigenschaft "kippbar" gibt an, ob ein Rohrteil horizontal gekippt werden kann. Wenn ein Rohrteil kippbar, drehbar und maximal verschiebbar ist, kann bei Rohrteilen, die nicht GTS-fähig zu dem gleichen Rohrteil sind, der Anfangstrennschnitt eines gleichen Rohrteils dennoch deaktiviert werden.

**Fig. 4b** zeigt zwei Anordnungen **66a, 66b** von zwei gleichen Rohrteilen 60, die hintereinander als ein vorderes Rohrteil **60a** und ein hinteres Rohrteil **60b** angeordnet sind. Durch Drehen und Verschieben können die beiden Rohrteile 60a, 60b nicht miteinander geschachtelt werden. Durch horizontales Kippen des hinteren Rohrteils 60b, eine 180°-Drehung um die Drehachse 13 und eine anschließende Verschiebung des hinteren Rohrteils 60b um den X_{AA}-Versatz in Vorschubrichtung 11 kann das hintere Rohrteil 60b zum vorderen Rohrteil 60a geschachtelt werden. Das gekippte hintere Rohrteil ist mit **60b*** bezeichnet. Da die Endgeometrie **63a** des vorderen Rohrteils 60a und die Anfangsgeometrie 63b des horizontal gekippten hinteren Rohrteils 60b* identisch sind, kann der Endtrennschnitt des vorderen Rohrteils 60a als gemeinsamer Trennschnitt der beiden Rohrteile 60a, 60b ausgeführt werden, so dass der Anfangstrennschnitt des hinteren Rohrteils 60b* deaktiviert und nicht ausgeführt wird.

**Fig. 4c** zeigt zwei gleiche Rohrteile 61, die hintereinander als ein vorderes Rohrteil **61a** und ein hinteres Rohrteil 61b angeordnet sind, in drei Anordnungen **67a, 67b, 67c.** Dabei zeigt die erste Anordnung 67a die Rohrteile 61 a, 61 b in ungeschachtelter Form, während die Rohrteile der Anordnungen 67b, 67c zueinander geschaltet sind. In der zweiten Anordnung **67b** wurde das hintere Rohrteil 61 b um den X_{BB}-Versatz verschoben. In der dritten Anordnung 67c wurde das hintere Rohrteil 61 b horizontal gekippt **(61b*),** um 180° um die Drehachse 13 gedreht und anschließend um den X_{BB}-Versatz verschoben. Die belegten Rohrlängen der zweiten und dritten Anordnung 67b, 67c stimmen überein. Der Vorteil der dritten Anordnung 67c mit dem horizontal gekippten Rohrteil 61 b* besteht darin, dass der Anfangstrennschnitt des hinteren Rohrteils 61 b* deaktiviert wird und daher nicht ausgeführt werden muss.

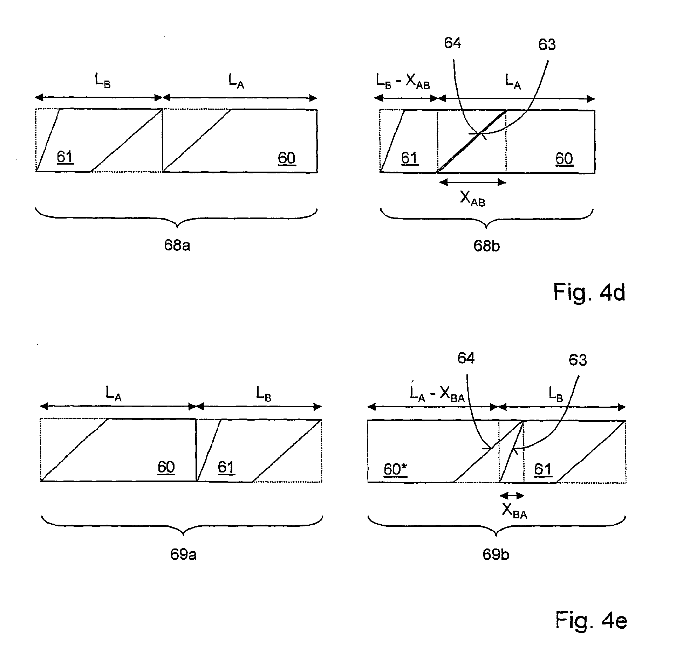

**Fign. 4d****,** e zeigen das längere Rohrteil 60 und das kürzere Rohrteil 61 von Fig. 4a, die in ungeschachtelter Anordnung **68a, 69a** und in geschachtelter Anordnung **68b, 69b** dargestellt sind. Fig. 4d zeigt das kürzere Rohrteil 61, das hinter dem längeren Rohrteil 60 angeordnet ist. Das hintere, kürzere Rohrteil 61 kann durch Verschieben um den X_{AB}-Versatz mit dem vorderen, längeren Rohrteil 60 geschachtelt werden, so dass sich die belegte Rohrteillänge des hinteren Rohrteils 61 um den X_{AB}-Versatz reduziert. Wenn die Rohrteile 60, 61 maximal verschiebbar sind, kann der Anfangstrennschnitt des hinteren Rohrteils 61 deaktiviert werden, da die Endgeometrie 63 des vorderen Rohrteils 60 und die Anfangsgeometrie **64** des hinteren Rohrteils 61 übereinstimmen. Fig. 4e zeigt das längere Rohrteil 60, das hinter dem kürzeren Rohrteil 61 angeordnet ist. Durch Drehen und Verschieben können die beiden Rohrteile 61, 60 nicht miteinander geschachtelt werden. Erst wenn das hintere, längere Rohrteil 60 horizontal gekippt wird **(60*),** können die beiden Rohrteile 61, 60* geschachtelt werden. Durch Drehen um 180° um die Drehachse 13 und Verschieben um den X_{BA}-Versatz in Vorschubrichtung 11 reduziert sich die belegte Rohrteillänge des hinteren Rohrteils 60* um den X_{BA}-Versatz. Da die Endgeometrie 63 des vorderen Rohrteils 61 und die Anfangsgeometrie 64 des hinteren Rohrteils 60* nicht übereinstimmen, kann der Anfangstrennschnitt des hinteren Rohrteils 60* nicht deaktiviert werden, sondern bleibt in dem Zustand "aktiv" und wird ausgeführt.

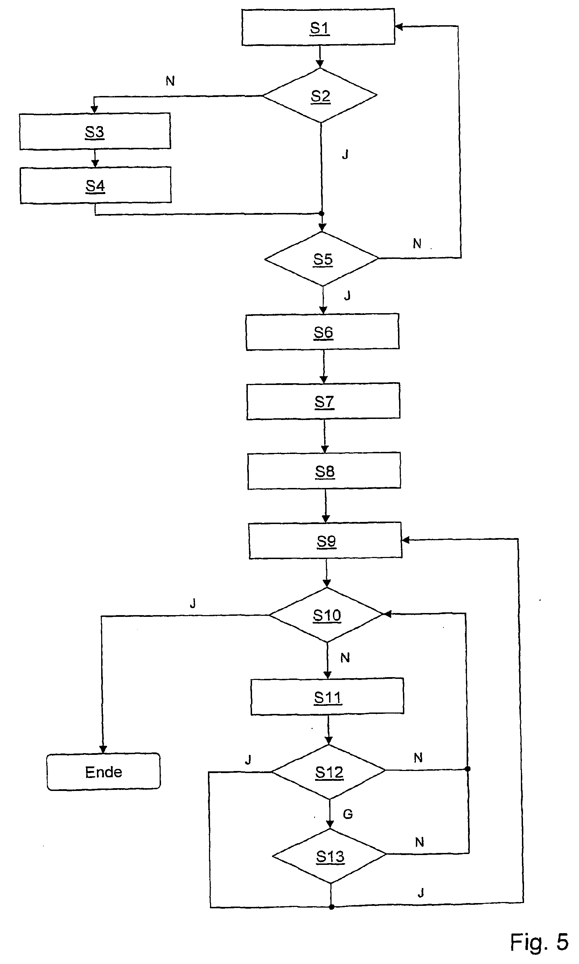

**Fig. 5** zeigt in Form eines Ablaufdiagramms die einzelnen Verfahrensschritte **S1** bis **S13** eines Optimierungsverfahrens zur Belegung eines Rohrs mit mehreren zu schneidenden Rohrteilen. Das Optimierungsverfahren umfasst einen ersten Verfahrensabschnitt mit den Schritten S1 bis S5, eine Längenmessung des Rohrs (Schritte S6 und S7) und einen zweiten Verfahrensabschnitt mit den Schritten S8 bis S13.

In einem ersten Schritt **S1** wird in der Auftragstabelle 49 der FMC-Software 39 ein Teileauftrag 49a, 49b für ein zu schneidendes Rohrteil angelegt und freigegeben. In einem zweiten Schritt **S2** wird geprüft, ob die Schachtelung dieses Rohrteils zu den anderen Rohrteilen der Auftragstabelle mit dem Status "frei" und zu dem gleichen Rohrteil durchgeführt wurde und die Schachtelergebnisse bereits vorliegen. Bei der Schachtelung zweier Rohrteile werden die mögliche Verdrehung (A-Versatz) und/oder Verschiebung (X-Versatz) des einen Rohrteils relativ zu dem anderen Rohrteil berechnet. Ob und wie weit ein Rohrteil gedreht und/oder verschoben werden kann, legt der Programmierer beim Erstellen des NC-Teileprogramms über die Eigenschaften "drehbar um A-Versatz" und "verschiebbar um X-Versatz" fest. Die Schachtelung basiert auf der Abwicklung der dreidimensionalen Rohrteile mit den Anfangs- und Endgeometrien in die zweidimensionale Ebene. Wenn das Ergebnis der Prüfung des Schritts S2 negativ (N) ist und die Schachtelung des Rohrteils nicht oder nicht vollständig durchgeführt wurde, wird in einem dritten Schritt **S3** die Schachtelung des Rohrteils zu dem gleichen Rohrteil und zu allen freigegebenen Rohrteilen der Auftragstabelle berechnet, und die berechneten Schachtelergebnisse (X- und A-Versätze) werden in einem vierten Schritt **S4** gespeichert. Die Schritte S3 und S4 werden als vorbereitende Berechnung bezeichnet. Entweder nach Schritt S4 oder wenn das Ergebnis der Prüfung des Schritts S2 positiv (J) ist, wird in einem fünften Schritt **S5** geprüft, ob für alle zu schneidenden Rohrteile ein Teileauftrag angelegt und freigegeben wurde. Ist das Ergebnis der Prüfung des Schritts S5 negativ (N), wird der erste Verfahrensabschnitt mit Schritt S1 fortgesetzt und ein weiterer Teileauftrag für ein Rohrteil freigegeben bzw. angelegt. Wenn das Ergebnis der Prüfung des Schritts S5 positiv (J) ist und für alle zu schneidenden Rohrteile in der Auftragstabelle ein Teileauftrag angelegt und freigegeben ist, ist der erste Verfahrensabschnitt des Optimierungsverfahrens beendet.

In einem sechsten Schritt **S6** wird die Längenmessung des Rohrs durchgeführt und der Messwert für die Rohrlänge in einem siebten Schritt **S7** von der Messeinrichtung an *die Steuerungsvorrichtung 6 der Laserschneidanlage* 1 übermittelt. Der zweite Verfahrensabschnitt des erfindungsgemäßen Verfahrens startet, nachdem die Steuerungsvorrichtung 6 in Schritt S7 den Messwert für die Rohrlänge erhalten hat. In einem achten Schritt S8 wird eine erste Rohrbelegungsvariante bestimmt, für die die Summe der Rohrteilelängen (Rohrteilsumme) und mit Hilfe der Schachtelergebnisse aus der vorbereitenden Berechnung (Schritte S3 und S4) des ersten Verfahrensabschnitts die belegte Rohrlänge berechnet werden. Die erste Rohrbelegungsvariante wird zusammen mit der Rohrteilsumme und der belegten Rohrlänge in einem neunten Schritt **S9** als "Beste Rohrbelegung" gespeichert. In einem zehnten Schritt **S10** wird geprüft, ob die Berechnung der Rohrbelegungsvarianten abgebrochen oder beendet wurde. Ist das Ergebnis der Prüfung des Schritts S10 positiv (J) und die Berechnung der Rohrbelegungsvarianten beendet, ist das Optimierungsverfahren beendet und die in Schritt S9 als "Beste Rohrbelegung" gespeicherte Rohrbelegungsvariante stellt das Ergebnis des Optimierungsverfahrens dar. Wenn das Ergebnis der Prüfung des Schritts S10 negativ (N) ist und die Berechnung weiterer Rohrbelegungsvarianten fortgesetzt wird, wird in einem elften Schritt **S11** eine weitere Rohrbelegungsvariante bestimmt, für die die Rohrteilsumme und die belegte Rohrlänge berechnet werden. Die Rohrteilsumme der weiteren Rohrbelegungsvariante wird in einem zwölften Schritt **S12** mit der in Schritt S9 gespeicherten Rohrteilsumme der "Besten Rohrbelegung" verglichen. Ist das Ergebnis des Vergleichs des Schritts S12 kleiner (N), also die Rohrteilsumme der weiteren Rohrbelegungsvariante kleiner als die Rohrteilsumme der "Besten Rohrbelegung", wird die in Schritt S11 berechnete Rohrbelegungsvariante verworfen und das erfindungsgemäße Verfahren wird mit Schritt S10 fortgesetzt. Ist das Ergebnis des Vergleichs von Schritt S12 hingegen größer (J), also die Rohrteilsumme der weiteren Rohrbelegungsvariante größer als die Rohrteilsumme der "Besten Rohrbelegung", wird das erfindungsgemäße Verfahren mit Schritt S9 fortgesetzt und die weitere Rohrbelegungsvariante mit der Rohrteilsumme und der belegten Rohrlänge nunmehr als "Beste Rohrbelegung" gespeichert. Wenn das Ergebnis des Vergleichs des Schritts S12 gleich (G) ist, also die Rohrteilsumme der weiteren Rohrbelegungsvariante der Rohrteilsumme der "Besten Rohrbelegung" entspricht, wird in einem dreizehnten Schritt **S13** die in Schritt S11 berechnete belegte Rohrlänge mit der belegten Rohrlänge der "Besten Rohrbelegung" verglichen. Ist das Ergebnis des Vergleichs von Schritt S13 größer oder gleich (N) ist, wird die in Schritt S11 bestimmte Rohrbelegungsvariante verworfen und das erfindungsgemäße Verfahren mit Schritt S10 fortgesetzt. Ist das Ergebnis des Vergleichs des Schritts S13 kleiner (J), wird das Verfahren mit Schritt S9 fortgesetzt und die weitere Rohrbelegungsvariante mit der Rohrteilsumme und der belegten Rohrlänge nunmehr als "Beste Rohrbelegung" gespeichert. Die "Beste Rohrbelegung" zeichnet sich bspw. gegenüber allen anderen berechneten Rohrbelegungsvarianten dadurch aus, dass die Rohrteilsumme am größten und bei gleicher Rohrteilsumme die belegte Rohrlänge am kleinsten ist.

Um die Zeit zur vorbereitenden Berechnung zu begrenzen, werden bei dem in Fig. 5 gezeigten Verfahren zur Optimierung der Rohrbelegung nur freigegebene Teileaufträge der Auftragstabelle 49 herangezogen, also Teileaufträge, die den Status "frei" aufweisen. Wenn ausreichend Zeit zur vorbereitenden Berechnung zur Verfügung steht, kann neben den freigegebenen Teileaufträgen auch die Schachtelung eines Rohrteils zu den gesperrten Teileaufträgen berechnet werden, also Teileaufträgen mit dem Status "gesperrt". Möglich ist es auch, die Schachtelung eines Rohrteils zu dem gleichen Rohrteil und zu anderen Rohrteilen bereits beim Importieren des zugehörigen NC-Teileprogramms in die Programmverwaltung 41 zu berechnen. In diesem Fall können der erforderliche Zeitaufwand und Speicherbedarf drastisch ansteigen.

Ein Teileauftrag bezieht sich normalerweise auf ein einzelnes Rohrteil, das durch den zugehörigen NC-Teileprogrammnamen eindeutig gekennzeichnet ist. Wenn Rohrteile baugruppenweise hergestellt werden sollen, können die verschiedenen Rohrteile der Baugruppe zu einem Auftrag zusammengefasst werden. Der Auftrag umfasst in diesem Fall sämtliche NC-Teileprogramme der einzelnen Rohrteile.

Teileaufträge für Rohrteile müssen nicht in der FMC-Software 39 angelegt werden, sondern können außerhalb der FMC-Software 39 in einem Programmiersystem erstellt werden. Anschließend wird die Auftragstabelle zusammen mit den NC-Teileprogrammen in die FMC-Software 39 importiert. Die Berechnung der Schachtelungen der Rohrteile zueinander kann ebenfalls in dem Programmiersystem durchgeführt werden. Die Schachtelergebnisse werden dann zusammen mit der Auftragstabelle in die FMC-Software 39 importiert.

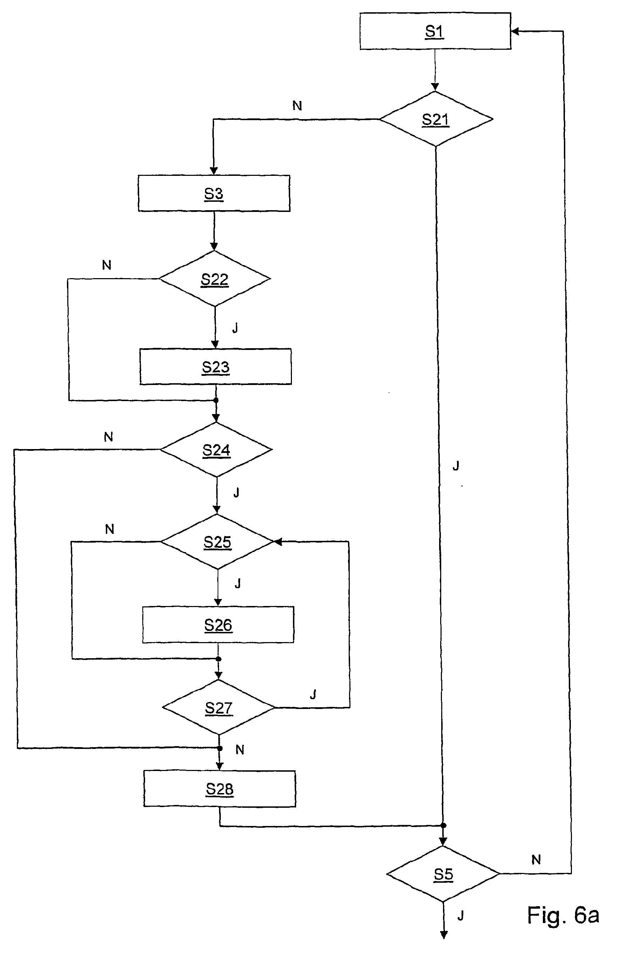

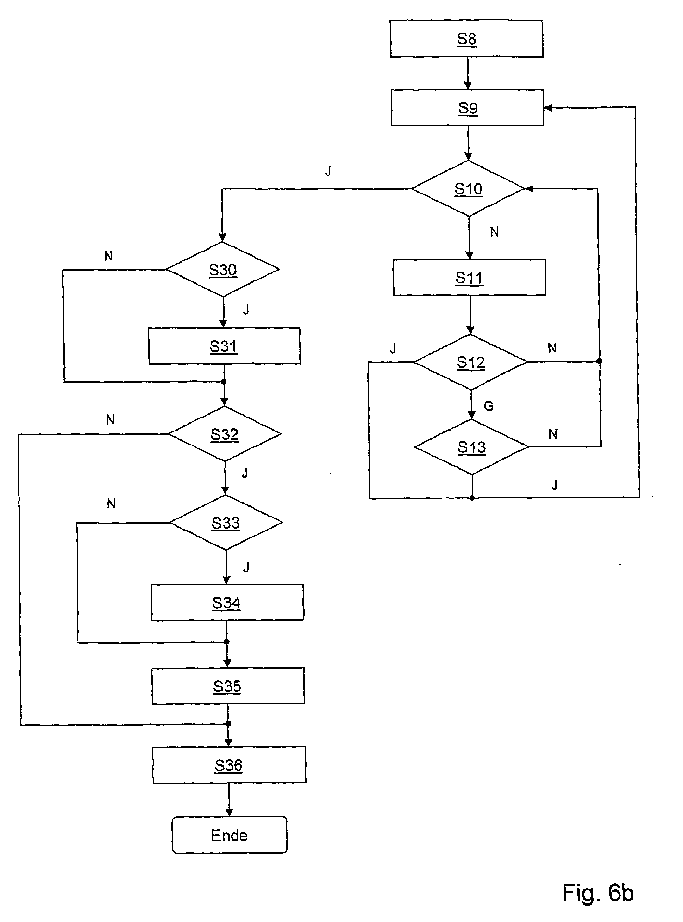

**Fign. 6a, b** zeigen in Form eines Ablaufdiagramms die einzelnen Verfahrensschritte einer ersten Ausführungsform des erfindungsgemäßen Verfahrens zur Steuerung einer Laserschneidanlage. Das erfindungsgemäße Verfahren zur Steuerung einer Laserschneidanlage lässt sich besonders vorteilhaft mit dem in Fig. 5 beschriebenen Verfahren zur Optimierung der Rohrbelegung eines Rohrs mit mehreren zu schneidenden Rohrteilen kombinieren.

Fig. 6a zeigt den ersten Verfahrensabschnitt des erfindungsgemäßen Verfahrens zur Steuerung einer Laserschneidanlage. Der erste Verfahrensabschnitt des in Fig. 5 gezeigten Optimierungsverfahrens umfasst die Schritte S1 bis S5. Nachdem ein Teileauftrag für ein Rohrteil in Schritt S1 freigegeben wurde, wird in einem Schritt **S21** geprüft, ob die Schachtelung des Rohrteils zu dem gleichen Rohrteil und zu den anderen freigegebenen Rohrteilen durchgeführt wurde (entspricht Schritt S2 in Fig. 5) und ob mögliche Deaktivierungen festgelegt wurden. Wenn das Ergebnis der Prüfung von Schritt S21 negativ (N) ist, wird in Schritt S3 die Schachtelung des Rohrteils berechnet. Nach Schritt S3 wird in einem Schritt **S22** geprüft, ob das Rohrteil GTS-fähig zu dem gleichen Rohrteil ist. Ist das Ergebnis der Prüfung von Schritt S22 positiv (J), wird für den Anfangstrennschnitt des Rohrteils in einem Schritt **S23** der Zustand "deaktiv" festgelegt. Nach Schritt S23 oder wenn das Ergebnis der Prüfung von Schritt S22 negativ (N) war, wird in einem Schritt **S24** geprüft, ob das Rohrteil GTS-fähig zu anderen Rohrteilen ist. Ist das Ergebnis der Prüfung von Schritt S24 positiv (J), wird in einem Schritt **S25** für ein anderes freigegebenes Rohrteil geprüft, ob die Anfangsgeometrie des anderen Rohrteils mit der Endgeometrie des aktuellen Rohrteils übereinstimmt. Ist das Ergebnis der Prüfung von Schritt S25 positiv (J), wird in einem Schritt **S26** für den Anfangstrennschnitt des Rohrteils der Zustand "deaktiv" festgelegt. Nach Schritt S26 oder wenn das Ergebnis der Prüfung von Schritt S25 negativ (N) ist, wird in einem Schritt **S27** geprüft, ob ein weiteres anderes freigegebenes Rohrteil, für das eine mögliche Deaktivierung noch nicht bestimmt wurde, existiert. Ist das Ergebnis der Prüfung von Schritt S27 positiv (J), wird das Verfahren mit Schritt S25 für das weitere andere freigegebene Rohrteil fortgesetzt. Wenn das Ergebnis der Prüfung von Schritt S24 oder Schritt S27 negativ (N) ist, werden die Schachtelergebnisse (X- und A-Versätze) und die Deaktivierungen des Rohrteils in einem Schritt **S28** gespeichert. Der erste Verfahrensabschnitt wird nach Schritt S28 mit der Prüfung von Schritt S5, ob für alle zu schneidenden Rohrteile ein Teileauftrag freigegeben wurde, fortgesetzt. Ist das Ergebnis der Prüfung des Schritts S5 negativ (N), wird der erste Verfahrensabschnitt mit Schritt S1 fortgesetzt und ein weiterer Teileauftrag angelegt und freigegeben. Wenn das Ergebnis der Prüfung des Schritts S5 positiv (J) ist und alle Teileaufträge angelegt sind, ist der erste Verfahrensabschnitt des erfindungsgemäßen Steuerungsverfahrens beendet. Da alle Schnitte (Anfangstrennschnitt, Konturschnitt und Endtrennschnitt) beim Erstellen des NC-Teileprogramms für ein Rohrteil standardmäßig aktiviert wurden, ist es nicht erforderlich, den Anfangstrennschnitt zu aktivieren, wenn das Ergebnis der Prüfung von Schritt S22 oder Schritt S25 negativ (N) ist.

Fig. 6b zeigt den zweiten Verfahrensabschnitt des erfindungsgemäßen Verfahrens zur Steuerung der Laserschneidanlage. In dem zweiten Verfahrensabschnitt des in Fig. 5 gezeigten Optimierungsverfahrens wird eine "Beste Rohrbelegung" (Schritte S8 und S9) ermittelt, die mit weiteren Rohrbelegungsvarianten verglichen (Schritt S12) und ggf. überschrieben wird (Schritt S9). Nachdem eine "Beste Rohrbelegung" ermittelt (Schritt S9) und die Berechnung weiterer Rohrbelegungsvarianten beendet wurde (Schritt S10), ist das Optimierungsverfahren beendet und die Reihenfolge, in der die zu schneidenden Rohrteile auf dem Rohr angeordnet sind, liegt vor. Erst jetzt kann geprüft werden, ob weitere Trennschnitte des ersten und letzten Rohrteils deaktiviert werden können.

Ist die Berechnung weiterer Rohrbelegungsvarianten beendet ((J) in Schritt S10), wird in einem Schritt **S30** geprüft, ob die Anfangsgeometrie des ersten Rohrteils mit dem Rohranfang übereinstimmt. Ist das Ergebnis der Prüfung von Schritt S30 positiv (J), wird der Anfangstrennschnitt des ersten Rohrteils in einem Schritt **S31** deaktiviert, also für den Anfangstrennschnitt des ersten Rohrteils der Zustand "deaktiv" festgelegt. Nach Schritt S31 oder wenn das Ergebnis der Prüfung von Schritt S30 negativ (N) ist, wird in einem Schritt **S32** geprüft, ob die Endgeometrie des letzten Rohrteils im Totbereich 56 der Spanneinrichtung 12 angeordnet ist. Wenn das Ergebnis der Prüfung von Schritt S32 positiv (J) ist, wird in einem Schritt **S33** geprüft, ob zwischen dem letzten und vorletzten Rohrteil ein Abfallmaterial entsteht und der Anfangstrennschnitt des letzten Rohrteils in Schritt S26 des ersten Verfahrensabschnitts auf "deaktiv" gesetzt wurde. Wenn das Ergebnis der Prüfung von Schritt S33 positiv (J) ist, wird der Anfangstrennschnitt des letzten Rohrteils in einem Schritt **S34** aktiviert, also auf den Zustand "aktiv" festgelegt. Nach Schritt S34 oder wenn das Ergebnis der Prüfung des Schritts S33 negativ (N) ist, wird der Endtrennschnitt des letzten Rohrteils in einem Schritt **S35** deaktiviert, also auf den Zustand "deaktiv" festgelegt. Nach Schritt S35 oder wenn das Ergebnis der Prüfung des Schritts S32 negativ (N) ist, wird das Ergebnis der Aktivierungen und Deaktivierungen des ersten und letzten Rohrteils in einem Schritt **S36** gespeichert. Das erfindungsgemäße Steuerungsverfahren ist nach Schritt S36 beendet.

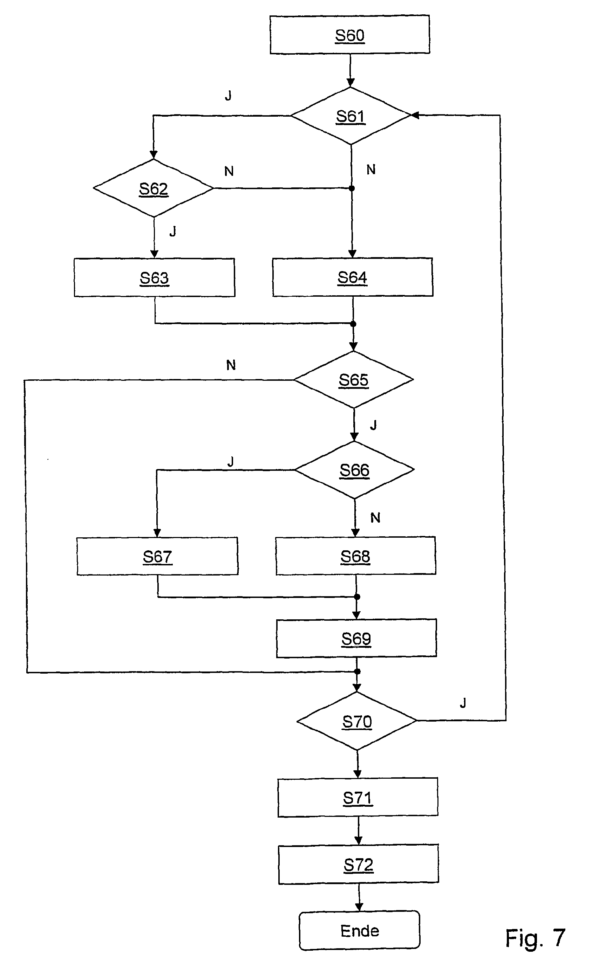

**Fig. 7** zeigt in Form eines Ablaufdiagramms eine weitere Ausführungsform des erfindungsgemäßen Verfahrens zur Steuerung einer Laserschneidanlage. Das bekannte Programmiersystem der Laserschneidanlage 1 gemäß Fig. 1 nutzt ein Verfahren zur Optimierung der Rohrbelegung mit mehreren Rohrteilen, das als Schachtelmodul "TubeLink" bekannt ist.

In einem ersten Schritt **S60** wird ein Produktionspaket mit den zu schneidenden Rohrteilen in der gewünschten Reihenfolge angelegt. Nach Schritt S60 wird in einem Schritt **S61** geprüft, ob ein Rohrteil GTS-fähig zu anderen Rohrteilen ist. Ist das Ergebnis der Prüfung des Schritts S61 positiv (J), wird in einem Schritt **S62** geprüft, ob die Anfangsgeometrie des Rohrteils mit der Endgeometrie des vorhergehenden Rohrteils übereinstimmt. Ist das Ergebnis der Prüfung des Schritts S62 positiv (J), wird der Anfangstrennschnitt des Rohrteils in einem Schritt **S63** deaktiviert. Ist das Ergebnis der Prüfung des Schritts S61 oder des Schritts S62 negativ (N), wird in einem Schritt **S64** die Schachtelung des Rohrteils zu dem vorhergehenden Rohrteil berechnet. Nach Schritt S63 oder Schritt S64 wird in Schritt **S65** geprüft, ob das Rohrteil in einer Stückzahl größer 1 gefertigt werden sollen. Ist das Ergebnis der Prüfung von Schritt S65 positiv (J), wird in einem Schritt **S66** geprüft, ob das Rohrteil GTS-fähig zu dem gleichen Rohrteil ist. Wenn das Ergebnis der Prüfung von Schritt S66 positiv (J) ist, wird der Anfangstrennschnitt des Rohrteils in einem Schritt **S67** deaktiviert. Ist das Ergebnis der Prüfung des Schritt S66 negativ (N), wird in dem Schritt S68 die Schachtelung des Rohrteils zu dem vorhergehenden Rohrteil berechnet. Nach Schritt S67 oder Schritt S68 werden die Schachtelergebnisse oder die Deaktivierungen des Rohrteils in einem Schritt **S69** gespeichert. Nach Schritt S69 oder wenn das Ergebnis der Prüfung von Schritt S65 negativ (N) ist, wird das Verfahren mit Schritt **S70** fortgesetzt, in dem geprüft wird, ob hinter dem aktuellen Rohrteil ein weiteres Rohrteil angeordnet ist. Ist das Ergebnis der Prüfung von Schritt S70 positiv (J), wird das Verfahren mit Schritt S61 fortgesetzt. Wenn das Ergebnis der Prüfung von Schritt S70 negativ (N) ist, wird das Produktionspaket in Schritt **S71** als Komplettrohrbelegung gespeichert und in Schritt **S72** an die Steuerungsvorrichtung 6 der Laserschneidanlage 1 übertragen. Nach Schritt S72 ist das erfindungsgemäße Verfahren zur Steuerung einer Laserschneidanlage beendet.

Die in Fig. 1 bekannte Laserschneidanlage 1 weist neben den vier genannten NC-Programmen (Normalprogramm, GTS-Programm, Besäumprogramm und Zuschnittprogramm) weitere Hilfs- oder Dienstprogramme auf, die nicht einem Rohrteil sondern einer Rohrgeometrie (Rohrdurchmesser, Querschnittsform) zugeordnet sind. Zu den Hilfs- und Dienstprogrammen gehören bspw. Ablängprogramme und Zerschneideprogramme. Ablängprogramme sind Hilfsprogramme, um an Rohren gerade Trennschnitte auszuführen. Zerschneideprogramme sind Dienstprogramme, die bei der Restrohrbehandlung eingesetzt werden, um das Restrohr zu zerschneiden bis es so kurz ist, dass es entladen werden kann. Ein erfindungsgemäßes NC-Teileprogramm, das einem Rohrteil zugeordnet ist, bietet den Vorteil, dass das NC-Teileprogramm auch als Ablängprogramm und/oder Zerschneideprogramm verwendet werden kann, wenn der Rohrdurchmesser und die Querschnittsform des Rohrteils und des Rohrs bzw. des Restrohrs übereinstimmen. Der Maschinenbediener kann eines der an die NC-Steuereinheit übertragenen NC-Teileprogramme als Zerschneideprogramm verwenden, indem er bspw. den Konturschnitt und den Endtrennschnitt deaktiviert.

## Patentansprüche

1. Verfahren zur Steuerung einer Laserschneidanlage (1) zum Schneiden von mehreren Rohrteilen (51-54) aus einem Rohr (2) mittels eines Laserstrahls (16),
wobei für jedes der zu schneidenden Rohrteile (51-54) ein NC-Teileprogramm mit einem Anfangstrennschnitt zum Schneiden der Anfangsgeometrie (51 a-54a) und einem Endtrennschnitt zum Schneiden der Endgeometrie (51b-54b) des jeweiligen Rohrteils (51-54) als separates Unterprogramm programmiert wird,
wobei für jedes zu schneidende Rohrteil (51-54) mehrere Rohrteileigenschaften im NC-Teileprogramm definiert sind, die angeben, ob der Anfangs- und/oder Endtrennschnitt des Rohrteils deaktiviert werden können,
wobei die zu schneidenden Rohrteile (51-54) entlang des Rohrs (2) anhand ihrer Rohrteileigenschaften so angeordnet werden, dass mindestens zwei benachbarte Rohrteile einen gemeinsamen Trennschnitt besitzen, und die Bearbeitung der zu schneidenden Rohrteile (51-54) auf Basis der NC-Teileprogramme erfolgt, und
wobei bei der Bearbeitung eines zu schneidenden Rohrteils, welches einen mit dem benachbarten Rohrteil gemeinsamen Trennschnitt besitzt und dadurch nur ein Trennschnitt für die Bearbeitung erforderlich ist, der programmierte Anfangs- oder Endtrennschnitt, der den gemeinsamen Trennschnitt darstellt, in dem zugehörigen NC-Teileprogramm deaktiviert und daher nicht ausgeführt wird.

2. Verfahren nach Anspruch 1, **dadurch gekennzeichnet, dass** für eines oder mehrere der zu schneidenden Rohrteile (51-54) in dem zugehörigen NC-Teileprogramm auch ein Konturschnitt (51c-54c) programmiert wird, wobei der Konturschnitt bei Vorliegen von bestimmten Bearbeitungsrandbedingungen deaktiviert und daher nicht ausgeführt wird.

3. Verfahren nach Anspruch 1 oder 2, **dadurch gekennzeichnet, dass** unter den Bearbeitungsrandbedingungen, dass bei zwei benachbarten zu schneidenden Rohrteilen (51, 52) die Endgeometrie (51b) des ersten Rohrteils (51) und die Anfangsgeometrie (52a) des zweiten Rohrteils (52) identisch sind und dass ein Einstechen des Laserstrahls (16) auf der Endgeometrie (51b) des ersten Rohrteils (51) und auf der Anfangsgeometrie (52a) des zweiten Rohrteils (52) zugelassen ist, entweder der programmierte Endtrennschnitt des ersten Rohrteils (51) oder der programmierte Anfangstrennschnitt des zweiten Rohrteils (52) in dem NC-Teileprogramm des ersten bzw. zweiten Rohrteils (51, 52) deaktiviert und daher nicht ausgeführt wird.

4. Verfahren nach einem der vorhergehenden Ansprüche, **dadurch gekennzeichnet, dass** bei einem zu schneidenden Rohrteil (54), das im Totbereich (56) der Laserschneidanlage (1) angeordnet ist, unter den Bearbeitungsrandbedingungen, dass die Endgeometrie (54b) des Rohrteils (54) der Geometrie des Rohrendes (57) entspricht und auf dem Rohrende (57) angeordnet ist, der programmierte Endtrennschnitt des Rohrteils (54) in dem NC-Teileprogramm des Rohrteils (54) deaktiviert und daher nicht ausgeführt wird.

5. Verfahren nach Anspruch 4, **dadurch gekennzeichnet, dass** bei dem zu schneidenden Rohrteil (54), das im Totbereich (56) der Laserschneidanlage (1) angeordnet ist, unter der Bearbeitungsrandbedingung, dass zwischen der Anfangsgeometrie (54a) des Rohrteils (54) und der Endgeometrie (53b) des vorhergehenden Rohrteils (53) ein Spalt besteht, der Anfangstrennschnitt (54a) des Rohrteils (54) in dem NC-Teileprogramm aktiviert und ausgeführt wird.

6. Verfahren nach einem der vorhergehenden Ansprüche, **dadurch**
**gekennzeichnet, dass** bei dem ersten zu schneidenden Rohrteil (51) unter der Bearbeitungsrandbedingung, dass die Geometrie des Rohranfangs (59) identisch der Anfangsgeometrie (51 a) des ersten Rohrteils (51) ist, der programmierte Anfangstrennschnitt des ersten Rohrteils (51) in dem NC-Teileprogramm des ersten Rohrteils (51) deaktiviert und daher nicht ausgeführt wird.

7. Computerprogrammprodukt, welches Codemittel aufweist, die zum Durchführen aller Schritte des Verfahrens zur Steuerung einer Laserschneidanlage (1) nach einem der Ansprüche 1 bis 6 angepasst sind, wenn das Programm auf einer Datenverarbeitungsanlage abläuft.

## Claims

1. Method for controlling a laser cutting installation (1) for cutting a plurality of pipe portions (51-54) from a pipe (2) by means of a laser beam (16),
an NC component programme being programmed with an initial separation cut for cutting the initial geometry (51a-54a) and a final separation cut for cutting the final geometry (51b-54b) of the respective pipe portion (51-54) as a separate sub-programme for each of the pipe portions (51-54) to be cut, there being defined in the NC component programme for each pipe portion (51-54) to be cut a plurality of pipe portion properties which set out whether the initial and/or final separation cut of the pipe portion can be deactivated,
the pipe portions (51-54) to be cut being arranged along the pipe (2) in accordance with the pipe portion properties thereof in such a manner that at least two adjacent pipe portions have a common separation cut and the processing of the pipe portions (51-54) to be cut is carried out on the basis of the NC component programmes, and
the programmed initial or final separation cut which constitutes the common separation cut being deactivated in the associated NC component programme and therefore not being carried out when processing a pipe portion to be cut which has a common separation cut with respect to the adjacent pipe portion, and thereby only one separation cut is required for the processing operation.

2. Method according to claim 1, **characterised in that**, for one or more of the pipe portions (51-54) to be cut, in the associated NC component programme, a contour cut (51c-54c) is also programmed, the contour cut being deactivated and therefore not being carried out when specific peripheral processing conditions are present.

3. Method according to claim 1 or 2, **characterised in that**, under the peripheral processing conditions that, in two adjacent pipe portions (51, 52) to be cut, the final geometry (51b) of the first pipe portion (51) and the initial geometry (52a) of the second pipe portion (52) are identical, and that penetration of the laser beam (16) at the final geometry (51b) of the first pipe portion (51) and at the initial geometry (52a) of the second pipe portion (52) is permitted, either the programmed final separation cut of the first pipe portion (51) or the programmed initial separation cut of the second pipe portion (52) is deactivated in the NC component programme of the first or second pipe portion (51, 52) and is therefore not carried out.

4. Method according to any one of the preceding claims, **characterised in that**, in the case of a pipe portion (54) to be cut which is arranged in the dead range (56) of the laser cutting installation (1), under the peripheral processing conditions that the final geometry (54b) of the pipe portion (54) corresponds to the geometry of the pipe end (57) and is arranged at the pipe end (57), the programmed final separation cut of the pipe portion (54) is deactivated in the NC component programme of the pipe portion (54) and is therefore not carried out.

5. Method according to claim 4, **characterised in that**, in the case of the pipe portion (54) to be cut which is arranged in the dead range (56) of the laser cutting installation (1), under the peripheral processing condition that there is a gap between the initial geometry (54a) of the pipe portion (54) and the final geometry (53b) of the preceding pipe portion (53), the initial separation cut (54a) of the pipe portion (54) is activated in the NC component programme and is carried out.

6. Method according to any one of the preceding claims, **characterised in that**, in the case of the first pipe portion (51) to be cut, under the peripheral processing condition that the geometry of the pipe start (59) is identical to the initial geometry (51a) of the first pipe portion (51), the programmed initial separation cut of the first pipe portion (51) is deactivated in the NC component programme of the first pipe portion (51) and is therefore not carried out.

7. Computer programme product which has code means which are adapted to carry out all the steps of the method for controlling a laser cutting installation (1) according to any one of claims 1 to 6, when the programme is carried out on a data processing installation.

## Revendications

1. Procédé de commande d'une installation de coupe au laser (1) pour la coupe de plusieurs pièces tubulaires (51-54) dans un tube (2) au moyen d'un rayon laser (16),
dans lequel, pour chacune des pièces tubulaires (51-54) à couper, un programme de pièce CN comprenant une coupe initiale pour couper la géométrie de début (51a-54a) et une coupe finale pour couper la géométrie de fin (51b-54b) de la pièce tubulaire (51-54) respective est programmé comme sous-programme séparé,
dans lequel, pour chacune des pièces tubulaires (51-54) à couper, plusieurs caractéristiques de pièce tubulaire, qui indiquent si la coupe initiale et/ou la coupe finale de la pièce tubulaire peuvent être désactivées, sont définies dans le programme de pièce CN,
dans lequel les pièces tubulaires (51-54) à couper sont disposées le long du tube (2) à l'aide de leur caractéristiques de pièce tubulaire de façon qu'au moins deux pièces tubulaires voisines possèdent une coupe commune, et l'usinage des pièces tubulaires (51-54) à couper s'effectue sur la base des programmes de pièce CN, et dans lequel, lors de l'usinage d'une pièce tubulaire à couper qui possède une coupe commune avec la pièce tubulaire voisine, et donc qu'une seule coupe est nécessaire pour l'usinage, la coupe initiale ou finale programmée qui représente la coupe commune est désactivée dans le programme de pièce CN correspondant et de ce fait non effectuée.

2. Procédé selon la revendication 1, **caractérisé en ce que** pour une ou plusieurs des pièces tubulaires (51-54) à couper, une coupe de contour (51c-54c) est également programmée dans le programme de pièce CN associé, la coupe de contour étant désactivée et de ce fait non effectuée en présence de conditions marginales d'usinage déterminées.

3. Procédé selon la revendication 1 ou 2, **caractérisé en ce que** sous les conditions marginales d'usinage que pour deux pièces tubulaires (51, 52) à couper voisines la géométrie de fin (51b) de la première pièce tubulaire (51) et la géométrie de début (52a) de la deuxième pièce tubulaire (52) soient identiques et qu'une incision du rayon laser (16) sur la géométrie de fin (51b) de la première pièce tubulaire (51) et sur la géométrie de début (52a) de la deuxième pièce tubulaire (52) soit autorisée, soit la coupe finale programmée de la première pièce tubulaire (51), soit la coupe initiale programmée de la deuxième pièce tubulaire (52) est désactivée dans le programme de pièce CN de la première ou de la deuxième pièce tubulaire (51, 52) et de ce fait non effectuée.

4. Procédé selon une des revendications précédentes, **caractérisé en ce que** dans le cas d'une pièce tubulaire (54) à couper qui est disposée dans la zone morte (56) de l'installation de coupe au laser (1), sous les conditions marginales d'usinage que la géométrie de fin (54b) de la pièce tubulaire (54) corresponde à la géométrie de la fin de tube (57) et soit disposée sur la fin de tube (57), la coupe finale programmée de la pièce tubulaire (54) est désactivée dans le programme de pièce CN de la pièce tubulaire (54) et de ce fait non effectuée.

5. Procédé selon la revendication 4, **caractérisé en ce que** dans le cas de la pièce tubulaire (54) à couper qui est disposée dans la zone morte (56) de l'installation de coupe au laser (1), sous la condition marginale d'usinage qu'il existe une fente entre la géométrie de début (54a) de la pièce tubulaire (54) et la géométrie de fin (53b) de la pièce tubulaire (53) précédente, la coupe initiale (54a) de la pièce tubulaire (54) est activée dans le programme de pièce CN et effectuée.

6. Procédé selon une des revendications précédentes, **caractérisé en ce que** dans le cas de la première pièce tubulaire (51) à couper, sous la condition marginale d'usinage que la géométrie du début de tube (59) soit identique à la géométrie de début (51a) de la première pièce tubulaire (51), la coupe initiale programmée de la première pièce tubulaire (51) est désactivée dans le programme de pièce CN de la première pièce tubulaire (51) et de ce fait non effectuée.

7. Produit programme d'ordinateur qui présente des moyens de code qui sont aptes à exécuter toutes les étapes du procédé de commande d'une installation de coupe au laser (1) selon une des revendications 1 à 6 quand le programme se déroule sur une installation de traitement de données.
